# NEUE EUROPÄISCHE PATENTSCHRIFT

(11) **EP 1 753 652 B2**
(45) Veröffentlichungstag und Bekanntmachung des Hinweises auf die Entscheidung über den Einspruch: **02.08.2017**
(45) Hinweis auf die Patenterteilung: 16.04.2008
(21) Anmeldenummer: 05752791.3
(22) Anmeldetag: 13.05.2005
(51) Int. Cl.: B62D 53/12

(54) **STECKVERBINDUNGEN**
PLUG-IN CONNECTIONS
FICHES DE RACCORDEMENT

(30) Priorität: 14.05.2004 DE 102004024333
(43) Veröffentlichungstag der Anmeldung: 21.02.2007
(73) Patentinhaber: Jost-Werke GmbH, 63263 Neu-Isenburg (DE)
(72) Erfinder: RICHTER, Martin, 60316 Frankfurt am Main (DE); STRÜTT, Achim, 64560 Riedstadt (DE); EIERMANN, Michael, 64319 Pfungstadt (DE); ALGÜERA, José Manuel, 63739 Aschaffenburg (DE)
(74) Vertreter: Mehler Achler
(86) Internationale Anmeldenummer: PCT/EP2005/005235
(87) Internationale Veröffentlichungsnummer: WO 2005/110836

(56) Entgegenhaltungen:
- EP-A- 0 084 712
- EP-A- 0 285 477
- STECKKUPPLUNG SA 66 der Firma SERMA

## Beschreibung

Die Erfindung betrifft ein Steckkupplungssystem zum Verbinden von Leitungen zwischen einem Zugfahrzeug und einem Auflieger gemäß dem Oberbegriff des Patentanspruchs 1. Die Erfindung bezieht sich auch auf eine Steckvorrichtung, an denen Komponenten des Steckkupplungssystems verwirklicht sind.

Die Leitungen können Versorgungsleitungen z.B. für Energie oder Druckluft sein.

Das Zugfahrzeug und der Auflieger bilden einen Sattelzug, das heißt auf dem Zugfahrzeug ist eine Sattelkupplung angeordnet, in die ein an der Unterseite des Aufliegers befindlicher Königszapfen in Eingriff gebracht und verriegelt wird. Die Sattelkupplungsplatte ist zum Ankuppeln des Aufliegers üblicherweise mit einer in Fahrtrichtung keilförmig zulaufenden Einfahröffnung ausgebildet, wobei die Einfahröffnung einen freien Bauraum mit mindestens einer Bauraumtiefe aufweist, die ein Ein- und Ausfahren des Königszapfens in die Sattelkupplung gewährleistet. Während des Ankuppeln gleitet der Auflieger hinsichtlich seiner vertikalen Ausrichtung auf der Oberfläche der Sattelkupplungsplatte. Die seitliche Führung wird über den Königszapfen gewährleistet, der während des Ankuppelns in der Einfahröffnung bis zum Erreichen seiner Verriegelungsposition zwangsgeführt ist. Hieraus ergibt sich, dass in die Einfahröffnung keine Bauteile hineinragen dürfen. Die Einfahröffnung wird nach unten durch die Länge des Königszapfens begrenzt. Unterhalb der Einfahröffnung befindliche Bauteile, wie beispielsweise Verstärkungsrippen, können dann beim An- und Abkuppeln des Aufliegers nicht mehr vom Königszapfen erfasst werden.

Steckkupplungssysteme sind in unterschiedlichen Ausführungen bekannt. Im einfachsten Fall handelt es sich um einen Stecker und eine Steckerbuchse, die jeweils an mehr oder weniger elastischen Leitungen befestigt sind. Aus Sicherheitsgründen wird üblicherweise am Zugfahrzeug das stromführende Ende des Steckkupplungssystems als Steckerbuchse ausgeführt. Nach dem Ankuppeln des Aufliegers an das Zugfahrzeug müssen noch die Versorgungsleitungen miteinander verbunden werden, was üblicherweise vom Fahrer von Hand vorgenommen wird. Vor dem Abkuppeln des Aufliegers ist das Steckkupplungssystem wieder zu trennen. Wenn dieses versehentlich vergessen wird, kommt es zu einem Auseinanderreißen des Steckkupplungssystems oder der Versorgungsleitungen.

Das Dokument EP 0 084 712 beschreibt eine Sattelkupplung mit Königszapfen und ein Steckkupplungssystem mit einer Steckerbuchse an der Sattelkupplung und einem Stecker an dem Königszapfen.

Es sind daher bereits Bestrebungen unternommen worden, das Verbinden und Trennen der Steckkupplungssysteme einerseits zu automatisieren und andererseits sicherer zu machen. Bei der Entwicklung derartiger Systeme werden grundsätzlich zwei unterschiedliche Wege beschritten.

Zunächst einmal existieren Steckkupplungssysteme, bei denen mit Hilfe eines Antriebes eine Verbindung zwischen den Versorgungsleitungen hergestellt wird. Ein derartiges aktives System wird beispielsweise in der DE 101 55 056 A1 beschrieben. Das bekannte Steckkupplungssystem umfasst eine Steckerbuchse, die verschiebbar in der Sattelkupplung angeordnet ist und über ihren Antrieb in eine aufliegerseitige Steckerbuchse verfahren werden kann. Um Beschädigungen der Steckerbuchse zu vermeiden, werden diese Systeme bevorzugt mit einer Sensorik ausgestattet, die das Vorhandensein eines Aufliegers erkennt und gegebenenfalls eine fälschlicherweise ausgefahrene Steckerbuchse zurückfährt, bevor es während des Ankuppeln des Aufliegers zu Beschädigungen an dem Steckkupplungssystem kommt.

Alternativ zu diesen technisch aufwendigen Steckkupplungssystemen mit verfahrbaren Komponenten des Steckkupplungssystems existieren Bemühungen, die Verbindung der Versorgungsleitungen in Abhängigkeit des Vorhandenseins eines Aufliegers mit Hilfe eines ortsfest angebrachten Steckers bzw. einer ortsfest angebrachten Steckerbuchse zu realisieren. Derartige passive Systeme werden in den nachfolgenden Druckschriften beschrieben.

Die US 5,060,964 offenbart eine Sattelkupplung, bei der die Kontakte im Endbereich der Sattelkupplungshörner beidseitig der Einführöffnung ortsfest angeordnet sind. Diese wirken mit ebenfalls ortsfesten Kontakten auf der Unterseite des Aufliegers zusammen. Eine Relativbewegung zwischen den zugfahrzeugseitigen und aufliegerseitigen Kontakten wird durch eine auf einem drehbaren Sockel gelagerte Sattelkupplung vermieden. Eine derartige Sattelkupplung, bei der die Kraftübertragung zwischen Zugfahrzeug und Auflieger punktförmig über den drehbaren Sockel in den Leiterrahmen des Zugfahrzeuges abgeleitet wird, lässt sich bei den heutigen Zugfahrzeugen kaum ohne erhebliche Änderungen in Form von Versteifungen am Zugfahrzeug installieren. Darüber hinaus wird die Bauhöhe der Sattelkupplung zusätzlich erheblich erhöht, was auf keine Akzeptanz bei den Fahrzeugbauern und Spediteuren stößt, da bei einer vorgegebenen maximalen Fahrzeughöhe das Ladevolumen verkleinert wird. Darüber hinaus hat sich in der Praxis gezeigt, dass die Kontakte aufgrund ihrer exponierten Position im Endbereich der Sattelkupplungshörner beim Ankuppeln durch einen nicht exakt in der Einfahröffnung befindlichen Königszapfen häufig beschädigt werden und dadurch das gesamte Steckkupplungssystem nicht mehr genutzt werden kann.

Einen anderen gattungsbildenden Stand der Technik bildet die DE-OS 20 39 340 mit einer automatischen Elektrik-Luftkupplung, die zusammenwirkend mit einer vollautomatischen Sattelkupplung das An- und Abkuppeln des Aufliegers eines Sattelzuges ermöglicht, ohne dass der Fahrer das Fahrerhaus zu verlassen braucht. Die automatische Elektrik-Luftkupplung ist durch ein zweiteiliges, den Königszapfen umgreifendes Kupplungsstück realisiert, welches an seiner Stirnseite Kontaktstellen aufweist, die beim Ankuppeln des Aufliegers mit Kontaktstellen im vorderen Verschlussbereich der Sattelkupplung zusammenwirken. Das Kupplungsstück ist als eine einen Stecker aufweisende Steckvorrichtung mit einem Tragelement ausgebildet, wobei das Tragelement Mittel zum schwenkbaren Anbringen um den Königszapfen aufweist. Der wesentliche Nachteil dieses Systems liegt in der hohen mechanischen Belastung des Kupplungsstückes, das durch eine Vielzahl von in Längsrichtung verlaufende Bohrungen zur Durchführung der Kabel bzw. der Druckluftleitungen zusätzlich geschwächt ist. Ein weiteres großes Problem stellt das betriebssichere Kontaktieren des Kupplungsstückes mit der Sattelkupplung in dem mit Schmierfett versehenen Verschlussbereich dar, da das Schmierfett die Kontakte verschmutzt und ein Stromfluss nicht immer gewährbar ist.

Es ist daher die Aufgabe der Erfindung, ein passives Steckkupplungssystem zu entwickeln, das beim An- und Abkuppeln eines Aufliegers an ein Zugfahrzeug ein komfortables und betriebssicheres Verbinden der Versorgungsleitungen ermöglicht. Eine weitere Teilaufgabe umfasst die Ausgestaltung der Baugruppe Steckvorrichtung hinsichtlich einer hohen betrieblichen Verfügbarkeit und Kompatibilität zu bestehenden Sattelkupplungssystemen.

Die Aufgabe wird erfindungsgemäß mit einem Steckkupplungssystem gemäß der Merkmale des Anspruchs 1 gelöst.

Unter ortsfest wird dabei eine antriebslose Lagerung der Steckerbuchse verstanden, das heißt ohne eine Möglichkeit des Verfahrens, um einen Kontakt zum aufliegerseitigen Stecker herzustellen. Aus der Anordnung der Steckerbuchse unmittelbar an der Sattelkupplung unterhalb der Einfahröffnung resultiert der Vorteil, dass die Sattelkupplung sehr niedrig bauend ausgeführt werden kann, da die Steckerbuchse mit der Sattelkupplung bei einer vertikalen Abwinklung zwischen Zugfahrzeug und Auflieger um die Lagerung der Sattelkupplung mitschwenkt. Dieses wäre bei einer ortsfest an dem Zugfahrzeug angeordneten Steckerbuchse nicht möglich. Bei einem Anbringen der Steckerbuchse an dem Fahrzeug unterhalb der Sattelkupplung müsste ein Sicherheitsabstand zwischen Sattelkupplung und Steckerbuchse entsprechend dem Schwenkwinkel der Sattelkupplung eingehalten werden, was zu einer erhöhten Position der Sattelkupplung auf dem Zugfahrzeug führen würde. Dieses ginge zu Lasten des Ladevolumens und wäre kaum hinzunehmen.

Die Steckerbuchse befindet sich darüber hinaus in einem geschützten Bereich, da die Einfahröffnung oberhalb der Steckerbuchse eine größere Bauraumtiefe aufweist als die Länge des Königszapfens und es daher nicht zu einer Kollision mit dem Königszapfen kommen kann. In Richtung des Aufliegers überragt die Sattelkupplungsplatte die Steckerbuchse, so dass auch bei einem zu niedrig stehenden Auflieger und einem Anstoßen an diesen, keine Beschädigungen an der Steckerbuchse entstehen.

Das vertikale Niveau des an der Steckvorrichtung befindlichen Steckers ist im wesentlichen durch die Position der Steckerbuchse vorgegeben und befindet sich, da die Steckerbuchse in eingekuppeltem Zustand des Aufliegers unter der durch die Länge des Königszapfens vorgegebenen Einfahröffnung angeordnet ist, ebenfalls unterhalb des Königszapfens.

Da sich der in der Sattelkupplung verriegelte Königszapfen nicht mehr in der Einfahröffnung befindet, ergibt sich aus der Position der Steckerbuchse unterhalb der Einfahrposition, dass der Stecker bezüglich des Königszapfens aufliegerseitig angeordnet und in verriegelter Position des Königszapfens unterhalb des Königszapfens in die Steckerbuchse eingefahren ist.

Vorzugsweise umfasst das Steckkupplungssystem ein an dem Zugfahrzeug angeordnetes Datenerfassungs- und -auswertegerät, welches mit einem Sensor zur Sensierung des Verriegelungszustandes der Sattelkupplung verbunden ist. Hierdurch wird es möglich, zusammen mit einer fernbedienbaren Sattelkupplung, das An- und Abkuppeln aus dem Führerhaus des Zugfahrzeuges vorzunehmen.

In einer besonderen Ausgestaltung weist der Stecker und die Steckerbuchse jeweils acht Kontaktstellen auf.

Günstigerweise ist der Stecker und die Steckerbuchse aus Kunststoff gefertigt. Eine Kunststoffbauweise verringert bei elektrischen Versorgungsleitungen den Aufwand einer elektrischen Isolierung von anderen elektrisch leitenden Fahrzeugteilen. Darüber hinaus ist das Steckkupplungssystem permanenten Witterungseinflüssen und im Winter zusätzlich Streusalz ausgesetzt, wodurch korrosionsbedingt erhebliche Schäden an dem Steckkupplungssystem entstehen könnten. Aufgrund der Fertigung aus Kunststoff werden jedoch Korrosionsprobleme weitgehend ausgeschlossen.

Die Steckerbuchse kann mit einer Kupplungs-Blattfeder gehalten sein, wobei die Kupplungs-Blattfeder in vertikaler Richtung biegeweich sein sollte. Mit Hilfe der Kupplungs-Blattfeder ist ein vertikaler Höhenausgleich der Steckerbuchse möglich.

Vorzugsweise greift die Kupplungs-Blattfeder mit ihrem der Steckerbuchse gegenüberliegenden Ende an einen unterhalb der Einfahröffnung angeordneten Quersteg der Sattelkupplung an.

In einer günstigen Ausführungsform ist die Steckerbuchse mit einer Einstecköffnung in Fahrtrichtung ausgerichtet.

Darüber hinaus hat es sich als vorteilhaft herausgestellt, die Steckerbuchse mit seitlich angeordneten Führungsarmen auszubilden. Die Führungsarme ragen entgegen der Fahrtrichtung über die Steckerbuchse hinaus und erleichtern ein Verbinden von Steckerbuchse und Stecker. Vorzugsweise laufen die Führungsarme konisch spitz zu und weisen im Bereich der Steckerbuchse ihre größte Dicke auf. Hierbei ist es besonders von Vorteil, wenn der Stecker mit ebenfalls komplementär ausgebildeten Führungselementen ausgebildet ist, in welche zu Beginn des Ankuppeln zunächst die Führungsarme eingreifen, so dass nachfolgend der Stecker zwangsgeführt bis zur mechanischen Verbindung von Steckerbuchse und Stecker an die Steckerbuchse herangeführt wird.

Die Teilaufgabe, betreffend eine Bereitstellung einer Steckvorrichtung, wird mit den Merkmalen des Anspruchs 5 gelöst.

Vorzugsweise ist der Stecker auf der Unterseite des Tragelementes oder innerhalb des Tragelementes in einem entsprechend ausgeformten nach unten offenen Hohlraum angeordnet.

Das Tragelement kann eine komplementär zu der keilförmigen Einfahröffnung ausgebildete Gestalt aufweisen. Dadurch richtet sich das Tragelement immer in gleicher Stellung zu der Sattelkupplung aus, wodurch auch das Verbinden von Stecker und Steckerbuchse besonders präzise möglich ist.

Vorteilhafterweise greift das Mittel zur schwenkbaren Anbringung des Tragelementes an dem Königszapfen und/oder einem Montageteller des Königszapfens an. Der Königszapfen stellt den Drehpunkt des Aufliegers dar. Ein in radialer Richtung zu dem Königszapfen immer konstanter Abstand gewährleistet, dass sowohl die Steckerbuchse als auch der in die Steckerbuchse eingeführte Stecker bei einer Relativbewegung zwischen Auflieger und Zugfahrzeug weitgehend von der Drehbewegung des Aufliegers entkoppelt ist und dadurch nur einer geringen Belastung unterliegt.

Der Stecker ist auf einer Grundplatte an dem Tragelement angeordnet. Auf der Grundplatte sind die wesentlichen funktionalen Elemente des Steckers vereint. Bei einem Defekt kann dieser durch ein Austauschen der gesamten Grundplatte sehr schnell behoben werden.

Günstigerweise ist die Grundplatte mittels einer Tragelement-Blattfeder in vertikaler Richtung federnd gelagert. Hierdurch ist insbesondere während des Ankuppelns des Aufliegers bis zum endgültigen Herstellen der Verbindung von Stecker und Steckerbuchse ein Höhenausgleich möglich. Nach der Verbindung von Steckerbuchse und Stecker erfolgt ein Ausgleich in vertikaler Richtung sowohl über die Kupplungs-Blattfeder als auch über die Tragelement-Blattfeder.

Die Tragelement-Blattfeder kann mit ihrem der Grundplatte gegenüberliegenden Ende an dem Tragelement befestigt sein.

Zusätzlich kann die Grundplatte seitlich verschiebbar in Langlöchern gehalten sein. Durch die Langlöcher ragen ortsfest an dem Tragelement angeordnete Stifte oder Bolzen. Ein konstruktiv einfacher seitlicher Endanschlag der Grundplatte lässt sich über beidseitig zu der Grundplatte beabstandete Haltearme herstellen, wobei die Haltearme die Grundplatte auch in ihrem Endanschlag übergreifen.

Um eine Relativbewegung zwischen Zugfahrzeug und Auflieger in Fahrtrichtung auszugleichen, ist der Stecker in Fahrtrichtung des Zugfahrzeugs gegenüber der Grundplatte federnd gelagert. Die federnde Lagerung kann z.B. mittels einer in Fahrtrichtung axial ausgerichteter Schraubenfeder vorgenommen werden. Vorzugsweise ist die Schraubenfeder bei Belastung als Druckfeder beansprucht. Aufgrund der federnden Lagerung des Steckers ist die Steckverbindung mechanisch entkoppelt von den Fahrzeugbewegungen, wodurch einerseits der Verschleiß verringert und andererseits eines stets konstante Steckkraft des Steckers in der Steckerbuchse erzielt wird. Diese ist erstrebenswert, da dadurch der Stecker immer in voller Tiefe in der Steckerbuchse eingesteckt ist und die Kontaktfläche zwischen Stecker und Steckerbuchse konstant bleibt. Diese konstanten Verhältnisse sorgen in gekuppeltem Zustand für einen weitgehend konstanten elektrischen Widerstand des Steckkupplungssystems.

Vorteilhafterweise weist der Stecker beidseitig Führungselemente zur Aufnahme von Führungsarmen einer Steckerbuchse auf. Die Führungselemente können hierzu beispielsweise halbmondartig ausgeformt sein, wobei die offene Seite nach außen gerichtet ist. Derartige Führungselemente werden während des Ankuppelns von entsprechend ausgeformten Führungsarmen, wie vorstehend bereits beschrieben, besonders treffsicher erfasst und der Stecker bei weiterer Annäherung zur Steckerbuchse präzise zu dieser ausgerichtet.

Vorzugsweise sind die Kontaktstellen des Steckers in Fahrtrichtung der Zugmaschine ausgerichtet. Diese Ausrichtung stimmt mit der vorzugsweise gewählten Ausrichtung der Einstecköffnung oder Einstecköffnungen der Steckerbuchse überein und unterstützt ein einfaches Verbinden von Stecker und Steckerbuchse durch Ankuppeln des Aufliegers an das Zugfahrzeug in Abhängigkeit der Position des Königszapfens in der Sattelkupplung.

Besonders günstig ist es, wenn der Stecker auf seiner Unterseite mit einer Gleitkufe ausgebildet ist. Häufig werden die Auflieger von unterschiedlichen Zugfahrzeugen aufgenommen, die möglicherweise nicht alle mit einer Sattelkupplung ausgerüstet sind, die eine Verbindung der Leitungen mit dem in Rede stehenden Steckkupplungssystem unterstützt. Der Stecker ist dann besonders gefährdet, wenn in dem Bereich unterhalb der Einfahröffnung Verstärkungsrippen oder ähnliche massive Bauteile der Sattelkupplung angeordnet sind, gegen die der Stecker anstoßen und beschädigt werden könnte. Durch die halbkreisförmige Unterseite der Gleitkufe in Verbindung mit der vertikal federnden Lagerung des Steckers bzw. der Grundplatte wird der Stecker aus dem Gefahrenbereich herausgehoben. Hierfür weist das Tragelement auf seiner Unterseite einen freien Bauraum zum Eintauchen des Steckers in das Tragelement auf.

Zum besseren Verständnis wird die Erfindung anhand der nachfolgenden sechs Figuren erläutert. Dabei zeigen die:
- **Fig. 1:**: eine Unteransicht einer Sattelkupplung mit eingefahrenem Königszapfen und verbundenem Steckkupplungssystem;
- **Fig. 2:**: ein Längsschnitt gemäß der Linie A - A in Fig. 1;
- **Fig. 3:**: eine Unteransicht einer Steckerbuchse;
- **Fig. 4:**: eine Unteransicht eines Steckers;
- **Fig. 5:**: eine perspektivische Ansicht einer Steckvorrichtung mit Königszapfen von schräg unten;
- **Fig. 6:**: ein Längsschnitt gemäß Fig. 2 mit in das Tragelement eingetauchtem Stecker.

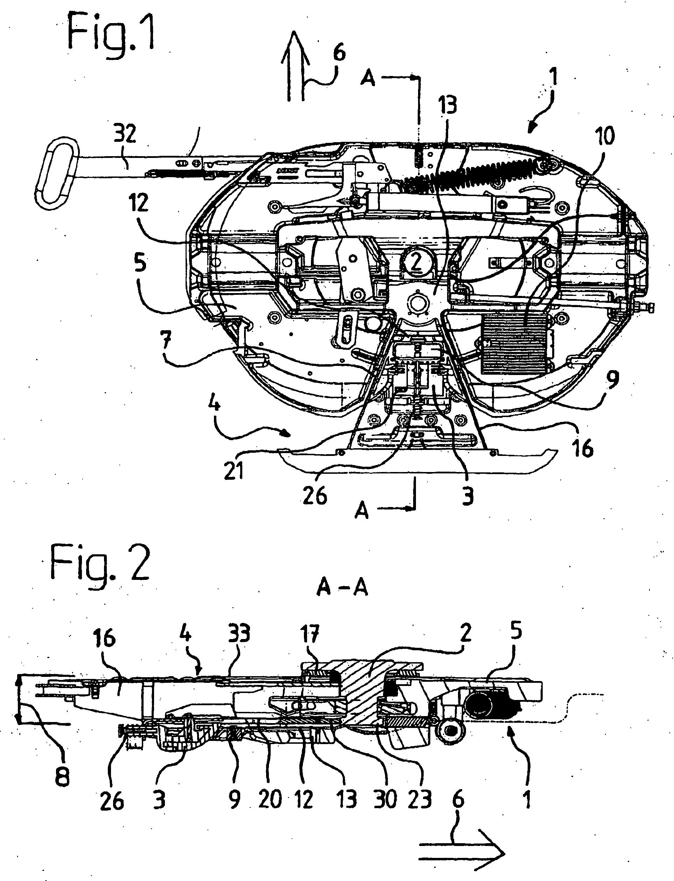

In der Fig. 1 ist in einer Unteransicht ein in die Sattelkupplungsplatte 5 eingefahrener und mit der Sattelkupplung 1 verriegelter Königszapfen 2 eines nicht dargestellten Aufliegers gezeigt.

An der entgegen der Fahrtrichtung 6 des ebenfalls nicht dargestellten Zugfahrzeuges liegenden Seite der Sattelkupplung 1 weist die Sattelkupplungsplatte 5 eine V-förmige Ausnehmung auf, die eine Einfahröffnung 7 für den Königszapfen 2 bildet. Während des Ankuppelns des Aufliegers befindet sich der Königszapfen 2 mitunter nicht genau mittig hinter der Sattelkupplungsplatte 5. In diesen Fällen wird der Königszapfen 2 durch die Wandungen der Einfahröffnung 7 zwangsgeführt und erreicht dadurch seine Verriegelungsposition. Unterhalb der Einfahröffnung 7, im Vordergrund der Darstellung der Fig. 1, befindet sich der Quersteg 13, über welchen der Königszapfen 2 sowohl beim Ankuppeln als auch Abkuppeln des Aufliegers hinwegfährt.

An dem Quersteg 13 der Sattelkupplung 1 greift mit einer Kupplungs-Blattfeder 12 auf demselben vertikalen Niveau die Steckerbuchse 9 an. Über die Steckerbuchse 9 fährt der Königszapfen 2 ebenfalls bei An- und Abkuppelvorgängen hinweg. Die Kupplungs-Blattfeder 12 ermöglicht eine vertikale Flexibilität der Steckerbuchse 9. Die Steckerbuchse 9 ist, abgesehen von dem Federweg der Kupplungs-Blattfeder 12, ortsfest an der Sattelkupplung 1 angebracht.

In der Einfahröffnung 7 befindet sich eine an dem Königszapfen 2 schwenkbar gelagerte und komplementär zu der Einfahröffnung 7 ausgeformte Steckvorrichtung 4, die als Bauteile im wesentlichen das Tragelement 16 und den auf der Unterseite des Tragelementes 16 angeordneten Stecker 3 umfasst. Der Stecker 3 ist an dem Tragelement 16 mit einem, von dem Federweg der Schraubenfeder 26 abgesehen, konstanten Abstand zu dem Königszapfen 2 positioniert, der derart gewählt ist, dass in der eingekuppelten Position des Königszapfens 2 der Stecker 3 mit der Steckerbuchse 9 in Verbindung steht.

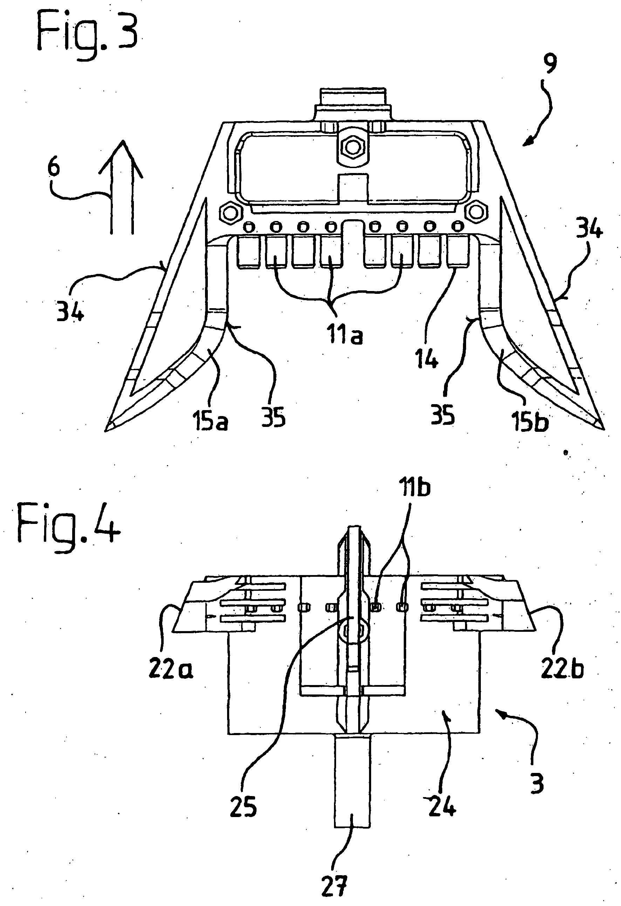

Der Stecker 3 ist mittels gegenüber dem Tragelement 16 feststehenden Bolzen in quer zur Fahrtrichtung 6 ausgerichteten Langlöchern 21 gelagert, von denen eines beispielhaft dargestellt ist. Die nähere Ausgestaltung der Steckvorrichtung 4 wird in Zusammenhang mit der Fig. 3 beschrieben.

Beim Abkuppeln des Aufliegers gleitet der Königszapfen 2 entgegen der Fahrtrichtung 6 aus der Sattelkupplung 1 heraus und überfährt sowohl den Quersteg 13 als auch die Steckerbuchse 9. Während dieses Vorganges wird ebenfalls die Verbindung zwischen Stecker 3 und Steckerbuchse 9 getrennt.

Die Sattelkupplung 1 gemäß der Fig. 1 ist mit einem Datenerfassungs- und - auswertegerät 10 ausgestattet, welches unterhalb der Sattelkupplungsplatte 5 in die Sattelkupplung 1 integriert wurde. Mit Hilfe des Datenerfassungs- und - auswertegerätes 10 und nicht dargestellten Sensoren, mit denen der Verschlusszustand der Sattelkupplung 1 sensiert werden kann, ist es dem Fahrer möglich, den Verschlusszustand der Sattelkupplung 1 aus dem Führerhaus des Zugfahrzeuges fern zu steuern, ohne dieses zu verlassen. Bei einem Ausfall von Systemkomponenten der fernsteuerbaren Sattelkupplung 1 ist es nach wie vor möglich, die Sattelkupplung 1 von Hand über den Betätigungshebel 32 zu bedienen.

In der Fig. 2 ist die Sattelkupplung 1 mit dem erfindungsgemäßen Steckkupplungssystem in einem Längsschnitt dargestellt. Dabei befindet sich der Königszapfen 2 in der Verriegelungsposition innerhalb der Sattelkupplung 1 und der nicht dargestellte Auflieger liegt mit seiner Unterseite auf dem Gleitbelag 33 der Sattelkupplungsplatte 5 auf. In dieser angekuppelten Position aber auch während des Ankuppeln des Aufliegers ist der in seiner axialen Länge normierte Königszapfen 2, dessen unteres Ende durch einen unteren Bund 23 begrenzt ist, in vertikaler Richtung nach oben durch die Auflast des Aufliegers und nach unten durch das Aufliegen des Aufliegers auf dem Gleitbelag 33 fixiert, so dass die Einfahröffnung 7 mit einer spezifischen konstruktiv vorgegebene Bauraumtiefe 8 ausgebildet sein kann und durch diese begrenzt wird. Die Bauraumtiefe 8 ist durch den Abstand des unteren Bundes 23 des Königszapfens 2 zur Oberseite der Sattelkupplungsplatte 5, das heißt zum Gleitbelag 33, bestimmt.

Die Steckerbuchse 9 befindet sich vollständig, das heißt auch mit seinen Kontaktstellen 11a (s. Fig. 3), unterhalb der Einfahröffnung 7 der Sattelkupplung 1. Unterhalb der Einfahröffnung 7 befindet sich ebenfalls der Quersteg 13, an welchem die Kupplungs-Blattfeder 12 angreift, die wiederum die Steckerbuchse 9 trägt.

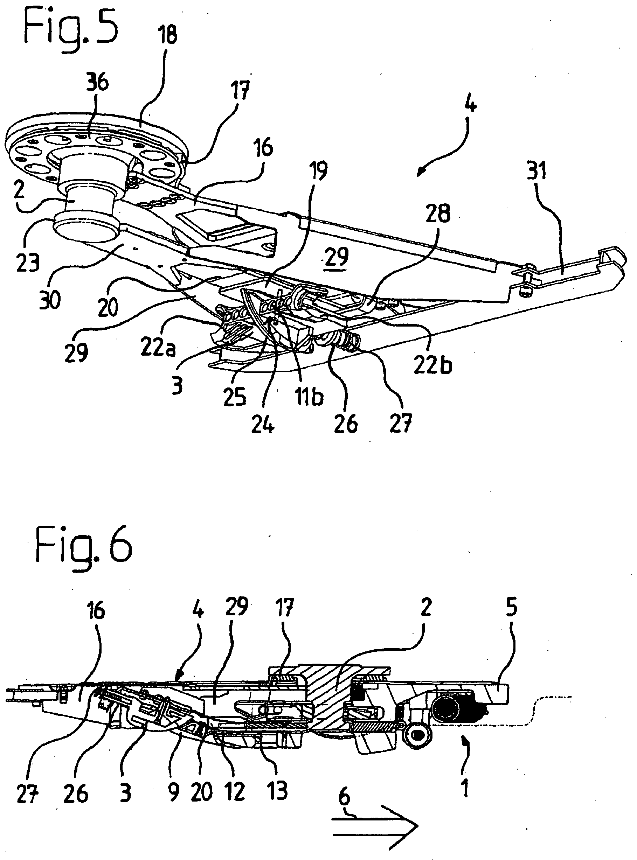

In die Steckerbuchse 9 ist der Stecker 3 eingesteckt. Der Stecker 3 ist über eine Tragelement-Blattfeder 20, die oberhalb der Kupplungs-Blattfeder 12 angeordnet ist, an einem Stützsteg 30 des Tragelementes 16 befestigt. In dem Stecker 3 sind in Fahrtrichtung 6 ausgerichtete Kontaktstellen 11b (s. Fig. 4, Fig. 5) angebracht, die hinsichtlich ihres vertikalen Niveaus weitgehend mit dem Niveau der Kontaktstellen 11a der Steckerbuchse 9 übereinstimmen. Die Tragelement-Blattfeder 20 hält alleine den Stecker 3, wenn der Auflieger nicht angekuppelt ist und ermöglicht während des Ankuppelvorganges einen geringfügigen Höhenausgleich zu der Steckerbuchse 9.

Die Fig. 3 zeigt in einer Unteransicht die Steckerbuchse 9. Die Steckerbuchse 9 weist eine V-förmige Gestalt auf, wobei die beiden Schenkel als Führungsarme 15a, 15b ausgebildet sind. Die Führungsarme 15a, 15b sind an ihrer Außenseite 34 mit einer ebenen Oberfläche versehen. Der Winkel der V-förmig auseinanderlaufenden Schenkelaußenseiten 34 entspricht dem Öffnungswinkel der Einfahröffnung 7 und der daran angepassten Geometrie des Tragelementes 16. Wie in Zusammenhang mit der Fig. 5 noch erläutert wird, kann die vertikal schwenkbar gelagerte Steckerbuchse 9 in einen freien Bauraum innerhalb von Seitenwänden 29 des Tragelementes 16 schwenken.

Die Innenseite 35 der Führungsarme 15a, 15b ist in einem ersten Abschnitt aufliegerseitig zunächst konvex gewölbt und geht in einen zweiten geraden Abschnitt über, der parallel zur Fahrtrichtung 6 des Zugfahrzeuges verläuft. Der erste gewölbte Abschnitt sorgt für die Ausrichtung des Steckers 3 gegenüber der Steckvorrichtung 9. Der zweite gerade Abschnitt ermöglicht ein gleichmäßiges Aufschieben des Steckers 3 auf die Steckerbuchse 9 ohne ein Verkanten des Steckers 3. In dieser Phase treten die zwischen den Führungsarmen 15a, 15b entgegen der Fahrtrichtung 6 ausgerichteten Kontaktstellen 11a in die Kontaktstellen 11b des Steckers 3 ein. In jeder der insgesamt acht Kontaktstellen 11a ist eine Einstecköffnung 14 angeordnet, über die der Stromfluss zwischen der Steckerbuchse 9 und den damit verbundenen Stecker 3 realisiert wird.

In der Fig. 4 ist der Stecker 3 ebenfalls in einer Unteransicht dargestellt. Die Breite des Steckers 3 entspricht ungefähr dem Abstand des zweiten geraden Abschnitts der Innenseiten 35 des ersten und zweiten Führungsarms 15a, 15b der Steckerbuchse 9 (Fig. 3). Beidseitig des Steckers 3 sind Führungselemente 22a, 22b ausgeformt, in welche die Führungsarme 15a, 15b während der Kupplungsvorgänge eingreifen und dadurch eine Führung des Steckers 3 herbeiführen. Auf der den Kontaktstellen 11b abgewandten Seite des Steckers 3 ist mittig ein zylindrischer Haltezapfen 27 angebracht, auf den eine in Fig. 5 erkennbare Schraubenfeder 26 aufgeschoben ist.

Eine perspektivische Ansicht einer an einem Königszapfen 2 angebrachten Steckvorrichtung 4 zeigt die Fig. 5. Dabei ist das Tragelement 16 der Steckvorrichtung 4 mit Mitteln 17 zur schwenkbaren Anbringung an den Königszapfen 2 versehen. Der Königszapfen ist mit Hilfe eines Montagetellers 18 an der Unterseite des Aufliegers befestigt. Beabstandet zu dem Montageteller 18 ist ein Haltekranz 36 angeordnet, der mit dem Montageteller 18 verschraubt ist. Die Mittel 17 hintergreifen den ortsfesten Haltekranz 36 und ermöglichen ein Schwenken der Steckvorrichtung 4 in Umfangsrichtung des Haltekranzes 36.

Das Tragelement 16 der Steckvorrichtung 4 ist als V-förmige Rahmenkonstruktion ausgebildet, deren Seiten an den Winkel der Einfahröffnung 7 angepasst sind. Nach unten erstrecken sich von dem Tragelement 16 beidseitig Seitenflächen 29, die an ihrem königszapfennahen Ende in den gemeinsamen Stützsteg 30 übergehen. Der Stützsteg 30 liegt an dem unteren Bund 23 des Königszapfens 2 an und leitet auftretende Kippmomente in den Königszapfen 2 ein.

Zwischen den Seitenwänden 29 ist der Stecker 3 zu erkennen. Der Stecker 3 ist auf einer Grundplatte 19 befestigt und die Grundplatte 19 wiederum an dem Tragelement 16. Um den Verschleiß der Steckvorrichtung zu minimieren, ist der Stecker 3 in verschiedenen Raumrichtungen beweglich gelagert. Wie in Zusammenhang mit der Fig. 3 bereits erläutert, wird eine seitliche Ausgleichsbewegung durch eine verschiebbare Anbringung der Grundplatte 19 an dem Tragelement 16 mit Langlöchern 21 (s. Fig. 1) ermöglicht. Ein häufig auftretender seitlicher Endanschlag würde jedoch zu Beschädigungen der Grundplatte 19 bzw. deren Langlöcher 21 oder den durch die Langlöcher hindurchreichenden Bolzen führen. Aus diesem Grund wird der maximale seitliche Verfahrweg der Grundplatte 19 mit dieser übergreifende Haltearme 28 begrenzt.

Zur Verringerung von Stoßbelastungen auf den Stecker 3 stützt sich dieser über die Schraubenfeder 26 an der Grundplatte 19 ab.

Ein Ausgleich in vertikaler Richtung ermöglicht die Tragelement-Blattfeder 20, welche mit ihrem einen Ende an der Grundplatte 19 und ihrem anderen Ende auf der Oberseite des Stützsteges 30 befestigt ist. Der Stecker 3 kann aufgrund seiner Aufhängung mittels der Blattfeder 20 in einen Freiraum im Tragelement 16 zwischen den Seitenwänden 29 eintauchen.

Die Verbindung der Leitungen kommt durch ein Einführen der Kontaktstellen 11a (s. Fig. 3) der Steckerbuchse 9 in die Kontaktstellen 11b des Steckers 3 zustande.

Die Steckvorrichtung schließt an ihrem hinteren Ende mit einem Abschlussprofil 31 ab.

Zur Vermeidung von Beschädigungen des Steckers 3 beim Ankuppeln des Aufliegers an ein Zugfahrzeug mit einer Sattelkupplung 1, die keine Steckerbuchse 9 aufweist aber in diesen Bereich hineinragende Bauteile, ist auf der Unterseite 24 des Steckers 3 eine Gleitkufe 25 ausgebildet, die auf das betreffende Bauteil auftrifft und den Stecker 3 aus dem Gefahrenbereich hebt.

Eine maximal angehobene Position des Steckers 3 zeigt die Fig. 6. Der Stecker 3 befindet sich in dem freien Bauraum zwischen den Seitenwänden 29 und stößt mit dem Haltezapfen 27 von unten gegen das Tragelement 16.

### Bezugszeichenliste

- 1: Sattelkupplung
- 2: Königszapfen
- 3: Stecker
- 4: Steckvorrichtung
- 5: Sattelkupplungsplatte
- 6: Fahrtrichtung Zugfahrzeug
- 7: Einfahröffnung
- 8: Bauraumtiefe Einfahröffnung
- 9: Steckerbuchse
- 10: Datenerfassungs- und -auswertegerät
- 11a: Kontaktstelle Steckerbuchse
- 11b: Kontaktstelle Stecker
- 12: Kupplungs-Blattfeder
- 13: Quersteg Sattelkupplung
- 14: Einstecköffnung Steckerbuchse
- 15a: erster Führungsarm Steckerbuchse
- 15b: zweiter Führungsarm Steckerbuchse
- 16: Tragelement
- 17: Mittel zur schwenkbaren Anbringung
- 18: Montageteller Königszapfen
- 19: Grundplatte
- 20: Tragelement-Blattfeder
- 21: Langloch
- 22a: erstes Führungselement Stecker
- 22b: zweites Führungselement Stecker
- 23: Unterer Bund Königszapfen
- 24: Unterseite Stecker
- 25: Gleitkufe
- 26: Schraubenfeder
- 27: Haltezapfen Schraubenfeder
- 28: Haltearm
- 29: Seitenwand Tragelement
- 30: Stützsteg Tragelement
- 31: Abschlussprofil
- 32: Betätigungshebel
- 33: Gleitbelag Sattelkupplungsplatte
- 34: Außenseite Führungsarm
- 35: Innenseite Führungsarm
- 36: Haltekranz

## Patentansprüche

1. Steckkupplungssystem zum Verbinden von Leitungen zwischen einem Zugfahrzeug und einem Auflieger,
- bei dem auf dem Zugfahrzeug eine Sattelkupplung (1) angeordnet ist,
- bei dem an dem Auflieger zum An-/Abkuppeln an die Sattelkupplung (1) ein Königszapfen (2) angeordnet ist, um den schwenkbar eine einen Stecker (3) aufweisende Steckvorrichtung (4) gelagert ist, wobei der Stecker (3) Kontaktstellen (11b) umfasst,
- bei dem die Sattelkupplung (1) eine Sattelkupplungsplatte (5) umfasst, die eine in Fahrtrichtung (6) keilförmig zulaufende Einfahröffnung (7) aufweist, wobei die Einfahröffnung (7) aus einem freien Bauraum mit mindestens einer Bauraumtiefe (8) ausgebildet ist, die ein Ein- und Ausfahren des Königszapfens (2) in die Sattelkupplung (1) gewährleistet, und
- bei dem das Zugfahrzeug eine Steckerbuchse (9) aufweist,
**dadurch gekennzeichnet,**
**dass** die Steckerbuchse (9) an der Sattelkupplung (1) ortsfest unterhalb der Einfahröffnung (7) angeordnet ist,
**dass** der Stecker (3) an einem Tragelement (16) angeordnet ist,
**dass** die Kontaktstellen (11b) des Steckers (3) an der Steckvorrichtung (4) unterhalb des Königszapfens (2) angeordnet sind, und
**dass** der Stecker (3) auf einer Grundplatte (19) an dem Tragelement (16) angeordnet ist und dass der Stecker (3) in Fahrtrichtung (6) des Zugfahrzeugs gegenüber der Grundplatte (19) federnd gelagert ist.

2. System nach Anspruch 1, **dadurch gekennzeichnet, dass** es ein an dem Zugfahrzeug angeordnetes Datenerfassung- und -auswertegerät (10) umfasst, welches mit einem Sensor zum Sensieren des Verriegelungszustandes der Sattelkupplung (1) verbunden ist.

3. System nach Anspruch 1 oder 2, **dadurch gekennzeichnet, dass** der Stecker (3) und die Steckerbuchse (4) jeweils acht Kontaktstellen (11a, 11b) aufweist.

4. System nach einem der Ansprüche 1 bis 3, **dadurch gekennzeichnet, dass** der Stecker (3) und die Steckerbuchse (4) aus Kunststoff gefertigt ist.

5. Steckvorrichtung (4) mit einem an einem Tragelement (16) angeordneten Kontaktstellen (11b) umfassenden Stecker (3) für ein eine Steckerbuchse (9) aufweisendes Steckkupplungssystem nach einem der Ansprüche 1 bis 4 zwischen einem Zugfahrzeug und einem Auflieger, wobei das Zugfahrzeug eine Sattelkupplungsplatte (5) mit einer in Fahrtrichtung (6) keilförmig zulaufenden Einfahröffnung (7) und der Auflieger einen in die Sattelkupplungsplatte (5) einführbaren Königszapfen (2) aufweist, und das Tragelement (16) Mittel (17) zur schwenkbaren Anbringung des Tragelementes (16) an dem Auflieger umfasst,
**dadurch gekennzeichnet,**
**dass** die Kontaktstellen (11b) des Steckers (3) an dem Tragelement (16) unterhalb des Königszapfens (2) angeordnet sind, und
**dass** der Stecker (3) auf einer Grundplatte (19) an dem Tragelement (16) angeordnet ist und dass der Stecker (3) in Fahrtrichtung (6) des Zugfahr zeugs gegenüber der Grundplatte (19) federnd gelagert ist.

6. Steckvorrichtung nach Anspruch 5, **dadurch gekennzeichnet, dass** das Tragelement (16) eine komplementär zu der keilförmigen Einfahröffnung (7) ausgebildete Gestalt aufweist.

7. Steckvorrichtung nach Anspruch 5 oder 6, **dadurch gekennzeichnet, dass** das Mittel (17) zur schwenkbaren Anbringung des Tragelementes (16) an dem Königszapfen (2) und/oder einem Montageteller (18) des Königszapfens (2) angreift.

8. Steckvorrichtung nach einem der Ansprüche 5 bis 7**, dadurch gekennzeichnet, dass** die Grundplatte (19) mittels einer Tragelement-Blattfeder (20) in vertikaler Richtung fedemd gelagert ist.

9. Steckvorrichtung nach Anspruch 8, **dadurch gekennzeichnet, dass** die Tragelement-Blattfeder (20) mit ihrem der Grundplatte (19) gegenüberliegenden Ende an dem Tragelement (16) befestigt ist.

10. Steckvorrichtung nach einem der Ansprüche 5 bis 9, **dadurch gekennzeichnet, dass** die Grundplatte (19) seitlich verschiebbar in Langlöchem (21) gehalten ist.

11. Steckvorrichtung nach einem der Ansprüche 5 bis 10, **dadurch gekennzeichnet, dass** der Stecker (3) beidseitig Führungselemente (22a, 22b) zur Aufnahme von Führungsarmen (15a, 15b) einer Steckerbuchse (9) aufweist.

12. Steckvorrichtung nach einem der Ansprüche 5 bis 11, **dadurch gekennzeichnet, dass** die Kontaktstellen (11b) des Steckers (3) in Fahrtrichtung (6) der Zugmaschine ausgerichtet sind.

13. Steckvorrichtung nach einem der Ansprüche 5 bis 12, **dadurch gekennzeichnet, dass** der Stecker (3) auf seiner Unterseite (24) eine Gleitkufe (25) aufweist.

## Claims

1. Plug-in coupling system for the connection of lines between a tractor vehicle and a semitrailer,
- in which a fifth wheel (1) is arranged on the tractor vehicle,
- in which a kingpin (2) is arranged on the semitrailer for coupling to/uncoupling from the fifth wheel (1), about which kingpin (2) a plug-in device (4) having a plug (3) is pivotably supported, wherein the plug (3) comprises contact locations (11b),
- in which the fifth wheel (1) comprises a fifth wheel plate (5) having an entry aperture (7) tapering in a wedge shape in the direction of travel (6), wherein the entry aperture (7) is formed by a free structural space having at least a structural space depth (8) which ensures entry of the kingpin (2) into and exit of the kingpin (2) from the fifth wheel (1), and
- in which the tractor vehicle has a plug socket (9),
**characterised in that**
the plug socket (9) is arranged on the fifth wheel (1) in a fixed position below the entry aperture (7),
**in that** the plug (3) is arranged on a carrier element (16),
**in that** the contact locations (11b) of the plug (3) are arranged on the plug-in device (4) below the kingpin (2), and
**in that** the plug (3) is arranged on a base plate (19) on the support element (16), and **in that** the plug (3) is resiliently supported with respect to the base plate (19) in the direction of travel (6) of the tractor vehicle.

2. System according to claim 1, **characterised in that** it comprises a data detection and evaluation device (10) which is arranged on the tractor vehicle and which is connected to a sensor for sensing the locking condition of the fifth wheel (1).

3. System according to claim 1 or 2, **characterised in that** the plug (3) and the plug socket (4) each have eight contact locations (11a, 11b).

4. System according to any one of claims 1 to 3, **characterised in that** the plug (3) and the plug socket (4) are produced from plastics material.

5. Plug-in device (4) having a plug (3), comprising contact locations (11b) which are arranged on a support element (16), for a plug-in coupling system having a plug socket (9) according to any one of claims 1 to 4 between a tractor vehicle and a semitrailer, wherein the tractor vehicle has a fifth wheel plate (5) having an entry aperture (7) tapering in a wedge-like manner in the direction of travel (6) and the semitrailer has a kingpin (2) which is insertable into the fifth wheel plate (5), and the support element (16) comprises means (17) for pivotably fitting the support element (16) to the semitrailer,
**characterised in that**
the contact locations (11b) of the plug (3) are arranged on the support element (16) below the kingpin (2) and
**in that** the plug (3) is arranged on a base plate (19) on the support element (16), and **in that** the plug (3) is resiliently supported with respect to the base plate (19) in the direction of travel (6) of the tractor vehicle.

6. Plug-in device according to claim 5, **characterised in that** the support element (16) has a shape formed to be complementary to the wedge-shaped entry aperture (7).

7. Plug-in device according to claim 5 or 6, **characterised in that** the means (17) for pivotably fitting the support element (16) acts on the kingpin (2) and/or on a mounting plate (18) of the kingpin (2).

8. Plug-in device according to any one of claims 5 to 7, **characterised in that** the base plate (19) is resiliently supported in the vertical direction by means of a support element leaf spring (20).

9. Plug-in device according to claim 8, **characterised in that** the support element leaf spring (20) is fastened to the support element (16) by its end opposite the base plate (19).

10. Plug-in device according to any one of claims 5 to 9, **characterised in that** the base plate (19) is held so as to be laterally displaceable in slots (21).

11. Plug-in device according to any one of claims 5 to 10, **characterised in that** the plug (3) has guide elements (22a, 22b) on both sides for receiving guide arms (15a, 15b) of a plug socket (9).

12. Plug-in device according to any one of claims 5 to 11, **characterised in that** the contact locations (11b) of the plug (3) are orientated in the direction of travel (6) of the tractor.

13. Plug-in device according to any one of claims 5 to 12, **characterised in that** the plug (3) has a skid (25) on the underside (24) thereof.

## Revendications

1. Système d'accouplement par emboîtement pour relier des câbles entre un véhicule tracteur et une semi-remorque,
- dans lequel une sellette d'attelage (1) est disposée sur le véhicule tracteur,
- dans lequel un pivot de fusée (2) est disposé sur la semi-remorque afin d'accoupler et de désaccoupler la sellette d'attelage (1), un dispositif d'emboîtement (4) présentant une fiche (3) étant logé de manière à pouvoir pivoter autour de celui-ci, la fiche (3) comprenant des zones de contact (11 b),
- dans lequel la sellette d'attelage (1) comporte une plaque de sellette d'attelage (5), qui présente un orifice d'entrée (7) se terminant en forme de coin dans le sens de la marche (6), l'orifice d'entrée (7) étant réalisé à partir d'un espace libre avec au moins une profondeur (8), qui garantit que le pivot de fusée (2) entre et sorte de la sellette d'attelage (1), et
- dans lequel le véhicule tracteur présente une fiche femelle (9),
**caractérisé en ce que**
la fiche femelle (9) sur la sellette d'attelage (1) est disposée fixement au-dessous de l'orifice d'entrée (7),
la fiche (3) est disposée sur un élément porteur (16),
les zones de contact (11b) de la fiche (3) sont disposées sur le dispositif d'emboîtement (4) au-dessous du pivot de fusée (2), et
- la fiche (3) est disposée sur une plaque de base (19) sur l'élément porteur (16) et la fiche (3) est logée de manière élastique dans le sens de marche (6) du véhicule tracteur en vis-à-vis de la plaque de base (19).

2. Système selon la revendication 1, **caractérisé en ce qu'**il comprend un appareil d'acquisition et d'évaluation des données (10) disposé sur le véhicule tracteur, lequel est relié à un capteur servant à détecter l'état de verrouillage de la sellette d'attelage (1).

3. Système selon la revendication 1 ou 2, **caractérisé en ce que** la fiche (3) et la fiche femelle (9) présentent respectivement huit zones de contact (11 a, 11 b).

4. Système selon l'une quelconque des revendications 1 à 3, **caractérisé en ce que** la fiche (3) et la fiche femelle (9) sont fabriquées en matière plastique.

5. Dispositif d'emboîtement (4) avec une fiche (3) comprenant des zones de contact (11 b) disposées sur un élément porteur (16) pour un système d'accouplement par emboîtement présentant une fiche femelle (9) selon l'une quelconque des revendications 1 à 4 entre un véhicule tracteur et une semi-remorque, le véhicule tracteur présentant une plaque de sellette d'attelage (5) avec un orifice d'entrée (7) se terminant en forme de coin dans le sens de la marche (6) et la semi-remorque présentant un pivot de fusée (2) pouvant être introduit dans la plaque de sellette d'attelage (5), et l'élément porteur (16) comprenant un moyen (17) pour monter de manière pivotante l'élément porteur (16) sur la semi-remorque,
**caractérisé en ce que**
les zones de contact (11 b) de la fiche (3) sont disposées sur l'élément porteur (16) au-dessous du pivot de fusée (2), et
**en ce que** la fiche (3) est disposée sur une plaque de base (19) sur l'élément porteur (16) et la fiche (3) est logée de manière élastique dans le sens de la marche (6) du véhicule tracteur en vis-à-vis de la plaque de base (19).

6. Dispositif d'emboîtement selon la revendication 5, **caractérisé en ce que** l'élément porteur (16) présente une forme réalisée de manière complémentaire à l'orifice d'entrée (7) en forme de coin.

7. Dispositif d'emboîtement selon la revendication 5 ou 6, **caractérisé en ce que** le moyen (17) de montage pivotant de l'élément porteur (16) vient en prise sur le pivot de fusée (2) et/ou sur un disque de montage (18) du pivot de fusée (2).

8. Dispositif d'emboîtement selon l'une quelconque des revendications 5 à 7, **caractérisé en ce que** la plaque de base (19) est logée de manière élastique dans le sens vertical au moyen d'un ressort à lame de l'élément porteur (20).

9. Dispositif d'emboîtement selon la revendication 8, **caractérisé en ce que** le ressort à lame de l'élément porteur (20) est fixé par son extrémité opposée à la plaque de base (19) sur l'élément porteur (16).

10. Dispositif d'emboîtement selon l'une quelconque des revendications 5 à 9, **caractérisé en ce que** la plaque de base (19) est maintenue de manière à se déplacer latéralement dans des trous oblongs (21).

11. Dispositif d'emboîtement selon l'une quelconque des revendications 5 à 10, **caractérisé en ce que** la fiche (3) présente des deux côtés des éléments de guidage (22a, 22b) pour recevoir des bras conducteurs (15a, 15b) d'une fiche femelle (9).

12. Dispositif d'emboîtement selon l'une quelconque des revendications 5 à 11, **caractérisé en ce que** les zones de contact (11 b) de la fiche (3) sont alignées dans le sens de la marche (6) du véhicule tracteur.

13. Dispositif d'emboîtement selon l'une quelconque des revendications 5 à 12, **caractérisé en ce que** la fiche (3) présente sur son dessous (24) un patin de glissement (25).
